# EUROPÄISCHE PATENTSCHRIFT

(11) **EP 0 800 957 B1**
(45) Veröffentlichungstag und Bekanntmachung des Hinweises auf die Patenterteilung: **25.07.2001**
(21) Anmeldenummer: 97105526.4
(22) Anmeldetag: 03.04.1997
(51) Int. Cl.: B60R 21/06, D04G 1/00

(54) **Sicherheits- und Trennetz für Kraftfahrzeuge oder dergleichen**
Safety or separation net for vehicles or the like
Filet de protection ou de séparation pour véhicules ou similaires

(30) Priorität: 13.04.1996 DE 19614711
(43) Veröffentlichungstag der Anmeldung: 15.10.1997
(73) Patentinhaber: Nölle-Pepin GmbH & Co. KG., 58332 Schwelm (DE)
(72) Erfinder: Nölle, Hans, 58332 Schwelm (DE)
(74) Vertreter: Spalthoff, Adolf, Dipl.-Ing.

(56) Entgegenhaltungen:
- EP-A- 0 672 557
- FR-A- 2 668 176
- GB-A- 212 591

## Beschreibung

Die Erfindung bezieht sich auf ein Sicherheits- und Trennetz für Kraftfahrzeuge od.dgl. nach dem Oberbegriff des Patentanspruchs 1.

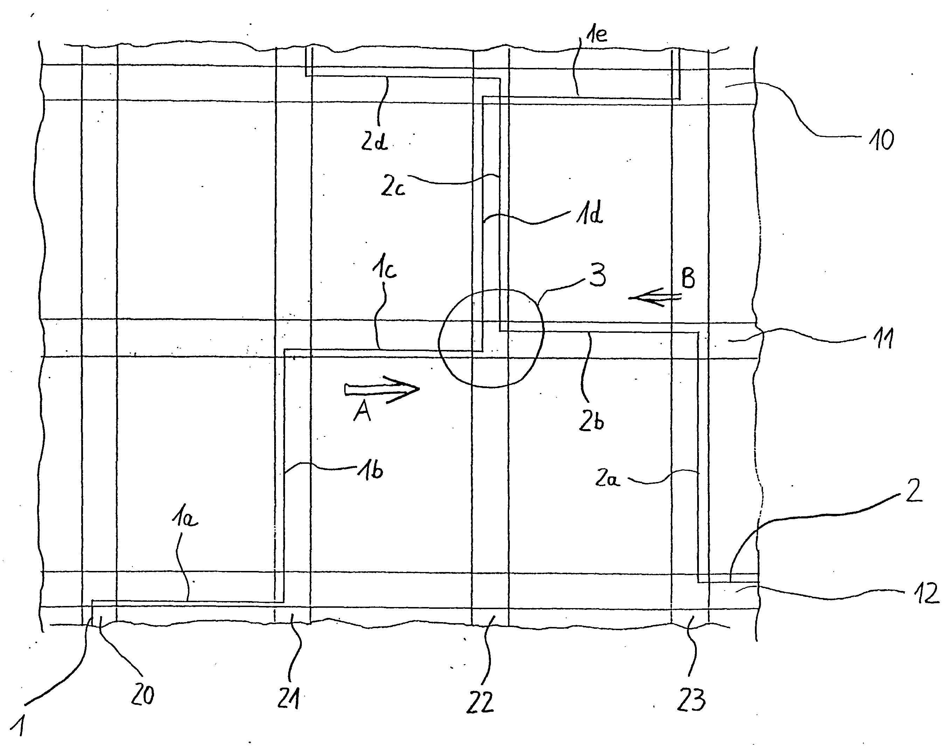

Aus der GB-A-212 591 ist ein Netz bekannt, bei dem einerseits Netzschüsse vorgesehen sind, die alternierend Stränge der beiden unterschiedlichen Strangscharen des Netzes durchlaufen. Des weiteren sind dort Netzschüsse vorgesehen, die über mehrere Maschen des Netzes ein- und demselben Strang einer Strangschar zugeordnet sind. Dies gilt für jeden Netzstrang der in Figur 1 der genannten Druckschrift in Vertikalrichtung sich erstreckenden Strangschar. Wenn bei Beschädigung eines dieser sich über mehrere Netzmaschen in einer Richtung erstreckenden Netzschusses Zug auf eines der durch Reißen entstehenden freien Enden dieses Netzschusses ausgeübt wird, ergibt sich eine beträchtliche Störung innerhalb der Struktur des Netzes; somit können schon leichte Beschädigungen des Netzes dessen Funktionsfähigkeit insgesamt beeinträchtigen.

Der Erfindung liegt die Aufgabe zugrunde, ausgehend von dem vorstehend geschilderten Stand der Technik gemäß der GB-A-212 591 ein Sicherheits- und Trennetz für Kraftfahrzeuge od.dgl. zu schaffen, welches erheblich stabiler ist und auch dann die erforderlichen Sicherheitsstandards erfüllen kann, wenn es den beim Betrieb von Kraftfahrzeugen od.dgl. auftretenden Beschleunigungs- und Verzögerungskräften kontinuierlich ausgesetzt wird.

Diese Aufgabe wird erfindungsgemäß dadurch gelöst, daß jeder Netzschuß des Sicherheits- und Trennetzes abwechselnd durch Netzstränge der ersten Strangschar und Netzstränge der zweiten Strangschar verläuft, und daß die Netzschüsse eine Metalleinlage aufweisen.

Durch den an den Netzknotenpunkten seine Richtung ändernden Verlauf der jeden Netzstrang bildenden Netzschüsse werden Verrutschungen an den Knotenpunkten des Netzes zuverlässig ausgeschlossen. Jeder unterschiedliche Strangscharen durchlaufende Netzschuß ist in geeigneter Weise mit anderen, in dem jeweiligen Netzstrang vorhandenen Netzschüssen verbunden bzw. bildet mit diesen ein miteinander verbundenes Gefüge. Aufgrund der Metalleinlage wird eine etwaige Dehnbarkeit der ansonsten aus einem textilen Material bestehenden Netzschüsse kompensiert.

Um die größtmögliche Stabilität an den Netzknotenpunkten zu erreichen, ist es vorteilhaft, wenn jeder Netzschuß seine Richtung an jedem seiner Netzknotenpunkte ändert.

Zur gleichmäßigen Ausgestaltung eines Netzes und zur Ausrüstung eines derartigen Netzes mit der gleichen Stabilität an allen Netzabschnitten ist es zweckmäßig, wenn jeder Netzschuß die Netzstränge einer Strangschar in demselben Richtungssinn durchläuft.

Zweckmäßigerweise wird ein Netzrand des erfindungsgemäßen Sicherheits- und Trennetzes durch eine Gurtkante gebildet, die vergleichsweise schmal oder breit sein kann.

Eine erhebliche Steigerung der Netzstabilität ist erreichbar, wenn jeder Netzstrang zumindest einer Strangschar in jedem seiner zwischen den Netzknotenpunkten angeordneten Längenabschnitte von zwei Netzschüssen gebildet wird.

Ein besonders stabiles Netzgefüge wird erreicht, wenn sich an jedem Netzknotenpunkt die beiden einen Längsabschnitt des Netzstreifens gemeinsam bildenden Netzschüsse trennen und in zueinander entgegengesetzten Richtungen verlaufen.

Im folgenden wird die Erfindung an Hand einer Ausführungsform unter Bezugnahme auf die Zeichnung näher erläutert, in der ein Abschnitt eines erfindungsgemäßen Sicherheits- und Trennetzes dargestellt ist.

Ein in der einzigen Figur in einem Abschnitt dargestelltes erfindungsgemäßes Sicherheits- und Trennetz weist eine in der Figur sich von rechts nach links erstreckende erste Strangschar mit den Netzsträngen 10, 11 und 12 auf, die von den sich in der Figur von unten nach oben erstreckenden Netzsträngen 20, 21, 22, 23 einer zweiten Strangschar gekreuzt werden.

Die Netzstränge 10, 11, 12 der ersten Strangschar sind in herkömmlicher Weise aus einem textilen Material hergestellt, wobei die Netzschüsse, die die Netzstränge 10, 11, 12 ausbilden, in gerader Richtung durch das Netz verlaufen.

Von den die Netzstränge 20, 21, 22, 23 der zweiten Strangschar bildenden Netzschüssen sind in der Figur beispielhaft ein Netzschuß 1 und ein Netzschuß 2 dargestellt.

Der Netzschuß 1 hat die in der einzigen Figur dargestellten Längenabschnitte 1a, 1b, 1c, 1d, le, an die sich oben und unten weitere, in der Figur nicht dargestellte bzw. nicht vollständig dargestellte Längenabschnitte anschließen. Mit seinem Längenabschnitt 1a durchläuft der Netzschuß 1 einen zwischen zwei Knotenpunkten angeordneten Längenabschnitt des Netzstrangs 12 der ersten Strangschar. Mit seinem Längenabschnitt 1b durchläuft der Netzschuß 1 einen Längenabschnitt des Netzstrangs 21 der zweiten Strangschar, wobei der Netzschuß 1 an dem Übergang zwischen seinen beiden Längenabschnitten 1a und 1b eine Richtungsänderung von 90 Grad erfährt. Dasselbe gilt am Übergang zwischen den Längenabschnitten 1b und 1c des Netzschusses 1, so daß dessen Längenabschnitt 1c durch einen Längenabschnitt des Netzstrangs 11 der ersten Strangschar verläuft; entsprechend verläuft der Längenabschnitt 1d, der auf einen Netzknotenpunkt 3 folgt, einen Längenabschnitt des Netzstrangs 22 der zweiten Strangschar. Der sich entsprechend anschließende Längenabschnitt le des Netzschusses 1 verläuft dann durch einen Längenabschnitt des Netzstrangs 10 der ersten Strangschar.

Entsprechendes gilt für die Längenabschnitte 2a, 2b, 2c, 2d des Netzschusses 2, die entsprechend alternierend durch Längenabschnitte von Netzsträngen unterschiedlicher Strangscharen verlaufen.

Während der Netzschuß 1 die Netzstränge 12, 11 und 10 der ersten Strangschar mit dem durch den Doppelpfeil A dargestellten Richtungssinn durchläuft, durchläuft der Netzschuß 2 die Netzstränge 12, 11, 10 der ersten Strangschar in dem durch den Doppelpfeil B angezeigten Richtungssinn.

Im Netzknotenpunkt 3 treffen sich die beiden Netzschüsse 1, 2; der Netzschuß 1 verläuft mit seinem Längenabschnitt 1d durch den oberhalb des Netzknotenpunktes 3 angeordneten Längenabschnitt des Netzstrangs 22, durch den der Netzschuß 2 mit seinem Längenabschnitt 2c verläuft. Wie es für den oberhalb des Netzknotenpunktes 3 dargestellten Längenabschnitt des Netzstrangs 22 dargestellt und erläutert ist, verlaufen in jedem zwischen zwei Netzknotenpunkten angeordneten Längenabschnitt jedes Netzstrangs 20, 21, 22, 23 der zweiten Strangschar zwei Längenabschnitte von den Netzschüssen 1 und 2 entsprechenden weiteren Netzschüssen. Lediglich aus Gründen der Einfachheit der Darstellung sind in der Figur nur die Netzschüsse 1 und 2 dargestellt.

Im Netzknotenpunkt 3 treffen die aus unterschiedlichen Richtungen, nämlich A und B, herangeführten Längenabschnitte 1c des Netzschusses 1 und 2b des Netzschusses 2 zusammen. In dem oberhalb des Netzknotenpunktes 3 angeordneten Netzknotenpunkt laufen die Längenabschnitte le des Netzschusses 1 und 2d des Netzschusses 2 in unterschiedliche Richtungen voneinander weg.

Zur Aussteifung des Netzes ist es vorteilhaft, wenn die Netzschüsse 1 und 2 eine Metalleinlage aufweisen, durch die eine etwaige Flexibilität bzw. Elastizität des die Netzschüsse bildenden textilen Materials kompensiert wird.

Aufgrund der in jedem Netzknotenpunkt stattfindenden Richtungsänderung der Netzschüsse 1, 2 bzw. weiterer entsprechender Schüsse sind Verrutschungen an den Netzknotenpunkten sicher ausgeschlossen.

## Patentansprüche

1. Sicherheits- und Trennetz für Kraftfahrzeuge od.dgl., mit einer ersten Strangschar aus zueinander parallelen und gleich beabstandeten Netzsträngen (10, 11, 12) und einer zweiten Strangschar aus zueinander parallelen und gleich beabstandeten Netzsträngen (20, 21, 22, 23), die rechtwinklig zu den Netzsträngen (10, 11, 12) der ersten Strangschar angeordnet sind, wobei jeder Netzstrang (10, 11, 12; 20, 21, 22, 23) beider Strangscharen aus Längenabschnitten (1a, 1b, 1c, 1d, 1e; 2a, 2b, 2c, 2d) einer Mehrzahl von Netzschüssen (1, 2) gebildet ist, dadurch gekennzeichnet, daß jeder Netzschuß abwechselnd durch Netzstränge (10, 11, 12) der ersten Strangschar und Netzstränge (20, 21, 22, 23) der zweiten Strangschar verläuft und daß die Netzschüsse (1, 2) eine Metalleinlage aufweisen.

2. Sicherheits- und Trennetz nach Anspruch 1, bei dem jeder Netzschuß (1, 2) seine Richtung an jedem seiner Netzknotenpunkte (3) ändert.

3. Sicherheits- und Trennetz nach Anspruch 1 oder 2, bei dem jeder Netzschuß die Netzstränge (12, 11, 10) einer Strangschar in demselben Richtungssinn (A; B) durchläuft.

4. Sicherheits- und Trennetz nach einem der Ansprüche 1 bis 3, bei dem ein Netzrand durch eine Gurtkante gebildet ist.

5. Sicherheits- und Trennetz nach einem der Ansprüche 1 bis 4, bei dem jeder Netzstrang (20, 21, 22, 23) zumindest einer Strangschar in jedem seiner zwischen den Netzknotenpunkten (3) angeordneten Längenabschnitte von zwei Netzschüssen (1, 2) gebildet wird.

6. Sicherheits- und Trennetz nach Anspruch 5, bei dem sich an jedem Netzknotenpunkt (3) die beiden einen Längenabschnitt des Netzstrangs (22) gemeinsam bildenden Netzschüsse (1, 2) trennen und in zueinander entgegengesetzten Richtungen verlaufen.

## Claims

1. Safety and separating net for motor vehicles or the like, having a first group of cords comprising net cords (10, 11, 12) which are arranged parallel with one another and at an equal distance from one another, and a second group of cords comprising net cords (20, 21, 22, 23) which are arranged parallel with one another and at an equal distance from one another and which are arranged at right-angles to the net cords (10, 11, 12) of the first group of cords, each net cord (10, 11, 12; 20, 21, 22, 23) of the two groups of cords being formed from longitudinal portions (1a, 1b, 1c, 1d, 1e; 2a, 2b, 2c, 2d) of a plurality of net wefts (1, 2), characterised in that each net weft extends alternately through net cords (10, 11, 12) of the first group of cords and net cords (20, 21, 22, 23) of the second group of cords, and in that the net wefts (1, 2) have a metal insert.

2. Safety and separating net according to claim 1, wherein each net weft (1, 2) changes its direction at each of its net intersection points (3).

3. Safety and separating net according to claim 1 or 2, wherein each net weft extends through the net cords (12, 11, 10) of a group of cords in the same direction (A; B).

4. Safety and separating net according to any one of claims 1 to 3, wherein a net border is formed by a belt edge.

5. Safety and separating net according to any one of claims 1 to 4, wherein each net cord (20, 21, 22, 23) of at least one group of cords is formed by two net wefts (1, 2) in each of its longitudinal portions arranged between the net intersection points (3).

6. Safety and separating net according to claim 5, wherein the two net wefts (1, 2) together forming a longitudinal portion of the net cord (22) separate at each net intersection point (3) and extend in opposite directions to one another.

## Revendications

1. Filet de sécurité et de séparation pour véhicules automobiles ou similaires comprenant un premier ensemble de fils, formé de fils (10, 11, 12) disposés parallèlement les uns aux autres avec un espacement constant, ainsi qu'un second ensemble de fils, formé de fils (20, 21, 22, 23) disposés parallèlement les uns aux autres avec un espacement constant, à angle droit par rapport aux fils (10, 11, 12) du premier ensemble de fils, chaque fil (10, 11, 12; 20, 21, 22, 23) des deux ensembles de fils étant formé de tronçons longs (1a, 1b, 1c, 1d, 1e; 2a, 2b, 2c, 2d) appartenant à plusieurs duites (1, 2), caractérisé en ce que chaque duite s'étend alternativement dans des fils (10, 11, 12) du premier ensemble de fils et dans des fils (20, 21, 22, 23) du second ensemble de fils et en ce que les duites (1,2) comportent un renfort métallique.

2. Filet de sécurité et de séparation selon la revendication 1, dans lequel chaque duite (1, 2) change de direction à chacun de ses points d'intersection (3).

3. Filet de sécurité et de séparation selon la revendication 1 ou 2, dans lequel chaque duite (1, 2) s'étend dans une même direction (A; B) dans les fils (12, 11, 10) d'un ensemble de fils.

4. Filet de sécurité et de séparation selon une des revendications 1 à 3, dans lequel un bord de filet est formé par une lisière.

5. Filet de sécurité et de séparation selon une des revendications 1 à 4, dans lequel chaque fil (20, 21, 22, 23) d'au moins un ensemble de fils, dans chacun de ses tronçons longs situés entre les points d'intersection (3) est formé de deux duites (1, 2).

6. Filet de sécurité et de séparation selon la revendication 5, dans lequel, à chaque point d'intersection (3), les deux duites (1, 2) qui forment ensemble un tronçon long de fil (22) se séparent et s'étendent dans des directions mutuellement opposées.
